# EUROPEAN PATENT APPLICATION

(11) **EP 2 280 240 A2**
(43) Date of publication of application: **02.02.2011**
(21) Application number: 10165914.2
(22) Date of filing: 15.06.2010
(51) Int. Cl.: G01C 21/00, G08G 1/123

(54) **Dynamical positioning information generation**

(30) Priority: 30.06.2009 SE 0950505
(71) Applicant: Scania CV AB, 151 87 Södertälje (SE)
(72) Inventor: Thorén, Christer, 129 42, Hägersten (SE); Callenryd, Fredrik, 743 45, Storvreta (SE); Nilsson, Håkan, 146 38, Tullinge (SE)

(57) **Abstract**

An improved method and arrangement for positioning information determination is disclosed. The method and arrangement according to the present invention are **characterized in that** a first and a second consecutive point in time of a number of at least two points in time, for which geographical positions are generated, are separated by a time interval, wherein that time interval has a length, which is dynamically determined based on a velocity of vehicle. By this, different time intervals between consecutive points in time for which positioning information is determined can be achieved by the present invention, since the length of each time interval is dependent on at least one of a velocity of the vehicle and a heading of the vehicle. Thereby, the positioning information generation, and the amount of produced data, can be optimized by the use of the present invention.

## Description

### Field of the invention

The present invention relates to a method for generating positioning information for a vehicle as defined in the preamble of claim 1.

The present invention also relates to an arrangement for generating positioning information for a vehicle as defined in the preamble of claim 20.

The present invention also relates to a computer program and a computer program product implementing the methods of the present invention.

### Related art and background of the invention

For positioning and/or tracking reasons, vehicles, such as cars, trucks, busses, tractors and the like, are often provided with positioning determining devices, such as Global Positioning System (GPS) devices or the like. Generally, the company owning the vehicles or employing the drivers also want to know where the vehicles are located at essentially all times.

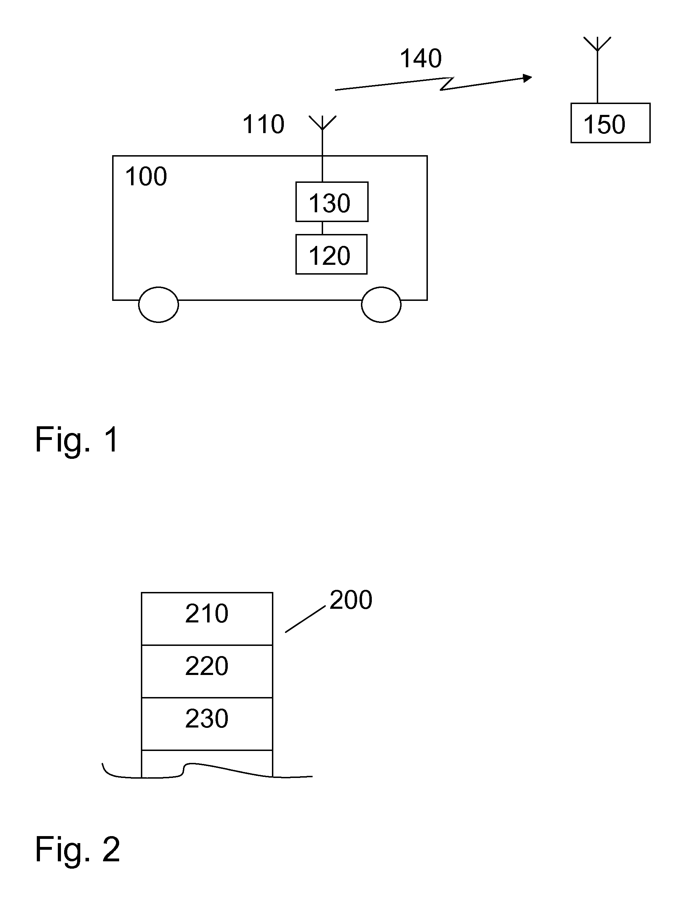

In some systems, such as fleet management systems, information relating to the determined positioning information is transmitted from the vehicle via a wireless communication system, such as a General Packet Radio Service (GPRS) system, or any other wireless communication system being able to transfer such information, to a central entity gathering such information. This central entity can, for example, be a so called Fleet Management Portal (FMP). Such a system is schematically illustrated in figure 1, in which a vehicle 100 communicates with a FMP 150 via a GPRS system 140. The vehicle 100 comprises at least one antenna 110, a GPS device 120, generating positioning information, and a communication unit 130, providing the information to the FMP 150.

In prior art systems, messages including positioning information are periodically sent from the vehicle 100 to the FMP 150. A new message is here sent after each one of a standardized time interval has passed. For instance, a new message is sent every 5 minutes, such that the FMP 150 continuously can keep track of the vehicle 100 it monitors. In addition to the positioning information, these messages also include additional information. Such additional information can include a number of parameters being related to e.g. the vehicle, usage of the vehicle, the driver, or driver behaviour.

The form of these messages is standardised, such that the messages easily can be interpreted by the receiver, i.e. by the FMP 150. Figure 2 shows one example of how such a message 200 can be modelled. Specified and predetermined fields of these messages are allocated for predetermined information. For example, one field 210 of predefined size is allocated for positioning information, one field 220 of predefined size is allocated for information related to usage of the vehicle, one field 230 is allocated for driver behaviour information, and so on.

Such a prior art solution has a number of drawbacks. One of these drawbacks is that a relatively large amount of information is transferred over the wireless communication system, which is expensive since the provider of the communication system must be paid for each transferred bit of information. Also, since a relatively large amount of information is transferred from the vehicle to the FMP, both the communication unit in the vehicle and the FMP have to process a large amount of data, which uses up valuable processing time in both of these entities.

### Aim and most important features of the invention

It is an object of the present invention to provide a positioning information generation that solves the above stated problems.

The present invention aims to provide a more efficient positioning information generation, demanding less processing and less bandwidth for transfer of it than the positioning information generation methods known in the background art have needed.

The object is achieved by the above mentioned method for generating positioning information for a vehicle according to the characterizing portion of claim 1.

The object is also achieved by the above mentioned arrangement for generating positioning information for a vehicle according to the characterizing portion of claim 20.

The object is also achieved by the implementation of the methods of the invention in a computer program and by a computer program product.

The method and arrangement according to the present invention are **characterized in that** a first and a second consecutive point in time of a number of at least two points in time, for which geographical positions are generated, are separated by a time interval, wherein that time interval has a length, which is dynamically determined based on a velocity and/or a heading of the vehicle. Thus, different time intervals between points in time for which positioning information is determined can be achieved by the present invention, since the length of each time interval is dependent on the possibly varying speed and/or heading of the vehicle.

By this, the lengths of these time intervals can be chosen intelligently such that they are short enough to make it is possible to determine the most probable path for the vehicle, but long enough to reduce the amount of information being produced, and later being transferred over the wireless communication system. Thus, the lengths of the different time intervals are no longer static. Instead, the lengths will vary for different time intervals if the velocity is varying and/or if a vehicle heading is changing, such that dynamical time interval lengths, probably being different for consecutive time intervals, are achieved. Thereby, the positioning information generation and the amount of produced data can be optimized for the present situation, while still offering a possibility to determine the most probable path, by the use of the present invention.

According to an embodiment of the present invention, the lengths of the time intervals depend on the velocity of the vehicle such that the length increases with an increasing velocity of the vehicle. This has the advantage that the amount of generated, processed and transferred positioning information is minimized, since generally less positioning information is needed for roads on which the vehicle has a great speed, e.g. a motor highway, than for city streets, for determination of a most probably path of the vehicle. This is a utilization of the understanding that a driver has fewer options to exit a motor highway than to exit a city street.

According to an embodiment of the present invention, the lengths of the time intervals decrease with an increase of the velocity. By this, the time intervals can be regulated such that their corresponding geographical distances can be chosen to be essentially equal, such that an essentially even spread of positioning information is achieved.

According to an embodiment of the invention, the lengths of the time intervals decrease with an increase in heading change for the vehicle. That is, if the direction being travelled by the vehicle changes to a great extent, the lengths of the time intervals are shortened. By this, the time intervals are adapted such that positioning information is generated often if the vehicle travels on and changes between different city streets, which generates a lot of heading changes, while positioning information is generated more seldom if it travels on a motor highway, which is relatively straight. Thus, an adaption resulting in enough information for determining the most probable path is achieved, which also efficiently reduces the computation and the transmission of data.

According to an embodiment of the invention, the length of the time interval is determined such that positioning information is generated for geographical positions, for which the heading of the vehicle changes more than a certain level. By this, the length of the time interval can be adaptively determined such that no positioning information is generated when the vehicle follows a street, but positioning information is generated when the vehicle leaves one street and enters another street, since this result in a sharp turn.

According to an embodiment of the invention, the lengths of the time intervals depend on both the velocity of the vehicle and the heading of the vehicle. By this, a very reliable determination of the time interval lengths is possible.

According to a method for transfer of positioning information of the present invention, information related to two or more geographical positions is transmitted from the vehicle in one single message, which preferably has a dynamic form, such that at least one of the number of fields and the size of the fields of the message can be adjusted. Thus, the number of geographical positions being transmitted in a message can be altered. This dramatically reduces the amount of information having to be transmitted over the wireless communication system, since the messages can be sent much more seldom.

Detailed exemplary embodiments and advantages of the positioning information generation according to the invention will now be described with reference to the appended drawings illustrating some preferred embodiments.

### Brief description of the drawings

Fig. 1 shows a schematic prior art system.
Fig. 2 shows a prior art message.
Fig. 3 shows schematic example illustration of a most probable path.
Fig. 4 shows an example of a relationship between the time interval length and speed according to the invention.
Fig. 5 shows an example of a relationship between the time interval length and speed according to the invention.
Fig. 6 shows an algorithm flow chart diagram according to an embodiment of the invention.
Fig. 7 shows an algorithm flow chart diagram according to an embodiment of the invention.
Fig. 8 shows a dynamic message according to the invention.
Fig. 9 shows the arrangement according to the invention.

### Detailed description of preferred embodiments

The present invention emanates from the realization that the static form of generation and transmission of positioning information of the prior art systems results in excessive generation, processing, and transfer of data, of which a large portion is not needed by the receiver of the transferred data.

A central entity, such as a FMP, wants to be able to keep track of approximately where the vehicles it monitors are, or at least have been. It is usually not necessary for the central entity to know the exact position of the vehicle or the exact path having been travelled by the vehicle. This has been utilized by the present invention.

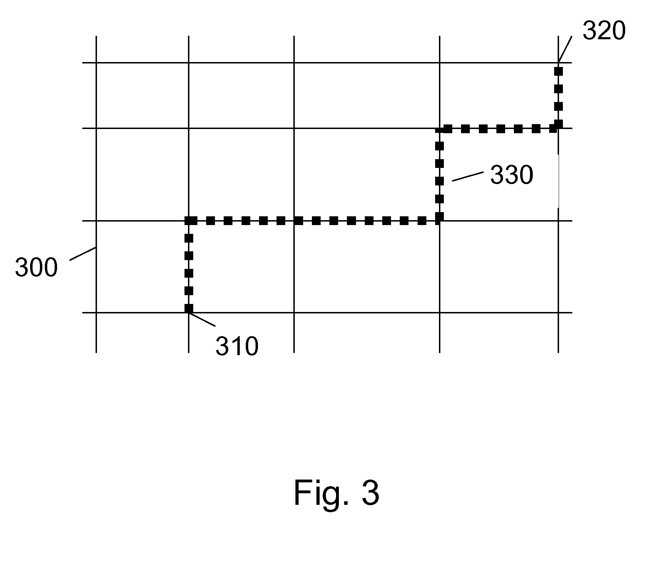

According to the present invention, positioning information is generated such that it is possible for the central entity to determine a most probable path the vehicle has travelled. The most probable path is defined as a path, including different streets or roads, the vehicle with a high probability has taken from a first address to a second address. This is schematically shown in figure 3, in which a road net 300 comprises a number of streets and roads crossing each other. If a vehicle has travelled from the first address 310 to the second address 320, the most probable path 330 is the path, including choices made in a number of crossings, which with high probability can be determined as the one the vehicle has taken from the first to the second address.

The determination of the most probable path is achieved by generating information related to a number of geographical positions, i.e. at least two geographical positions, where each of these geographical positions corresponds to a location of the vehicle in a specific point in time. According to the present invention, these geographical positions should be chosen intelligently at such a distance from each other that it is possible to determine the most probable path being travelled by the vehicle. This is achieved by dynamically determining time intervals separating consecutive points in time for which geographical information should be generated.

More specifically, the length of the time interval between a first and a second consecutive point in time is determined dynamically, where the determination of the length of this time interval is based on a velocity of the vehicle and/or on a heading of said vehicle. Thus, different time intervals between points in time for which positioning information is determined can, according to the present invention, have different lengths, since the length of each time interval is dependent on the possibly varying speed of the vehicle and/or on the possibly varying heading of the vehicle. By this dynamic determination of the lengths of these time intervals, a more efficient positioning information generation is achieved, since the generation of positioning information can be adapted to the actual movements of the vehicle. That is, the generation of positioning information can be controlled such that information related to geographical positions is only generated if it is needed for the most probable path to be determined. Thus, the amount of unnecessary generation, processing, and transfer of positioning information can be greatly reduced.

According to an embodiment of the invention, the length of the time interval is determined based on the velocity of the vehicle, but not based on the heading of the vehicle. Thus, out of the two parameters velocity and heading of the vehicle, only the velocity is used for dynamically determining the length of the time interval.

According to another embodiment of the invention, the length of the time interval is determined based on the heading of the vehicle, but not based on the velocity of the vehicle. Thus, out of the two parameters velocity and heading of the vehicle, only the heading is used for dynamically determining the length of the time interval.

According to another embodiment of the invention, the length of the time interval is determined based on both of the velocity and the heading of the vehicle. Thus, conclusions being drawn from both of these parameters are used in combination for dynamically determining the length.

According to an embodiment of the present invention, the length of such a time interval depends on the velocity of the vehicle such that the length increases with an increasing velocity of the vehicle, above a certain velocity of the vehicle. This has the advantage that the time interval length is determined based on the type of road being travelled by the vehicle, such that the amount of processed and transferred information is minimized.

For example, if the vehicle travels on a city street, its velocity is relatively low, and thus, according to this embodiment, the time interval length is also relatively short. On the other hand, if the vehicle travels on a motor highway or an autobahn, its velocity is relatively high, and therefore the time interval length is relatively long. These intervals will be sufficient for determining the positioning information, since the most probable path is the main interest for the determination. This results from the realization that there are much less road crossings or junctions on motor highways or autobahns than there are on city streets, and thus, for determining a most probable path, the time intervals can be made longer for a vehicle travelling on motor highways or autobahn than for vehicles travelling on city streets. By utilizing this, as is done by this embodiment, the generation of positioning information can be made more intelligently and efficiently, regarding transferred and processed data.

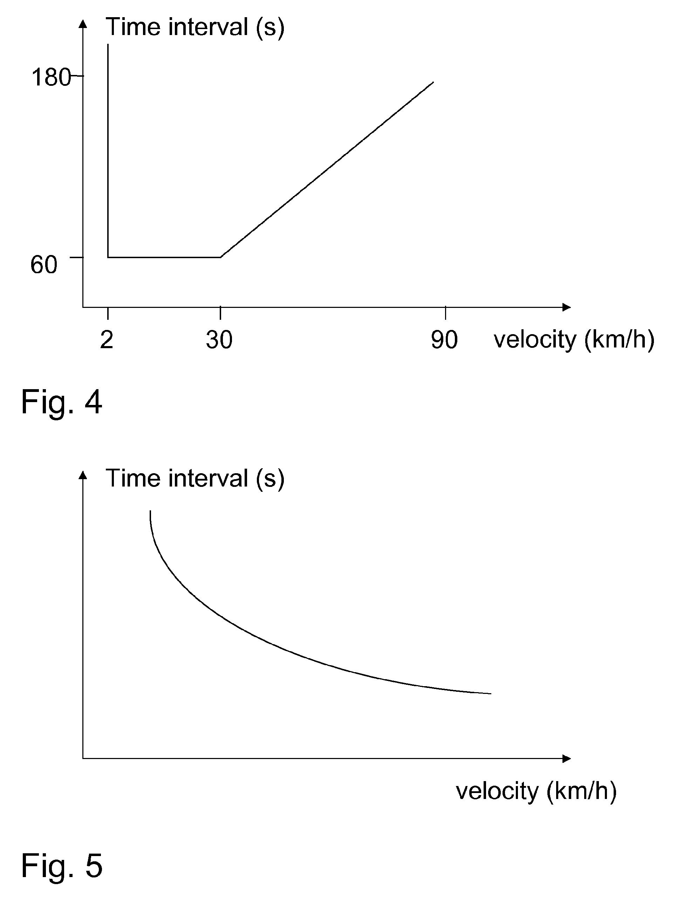

Figure 4 shows a non-limiting example of how time intervals can be chosen according to this embodiment of the invention. As can be seen in the figure, the length of the time interval is essentially equal for velocities between e.g. 2 km/h and 30 km/h. Between e.g. 30 km/h and 90 km/h, the length of the time interval increases with increasing velocity of the vehicle.

The relationship between the length of the time interval and the velocity should here be chosen such that a most probable path can be determined for the vehicle. This relationship therefore depends on the road net and the speed limits of the region where the vehicle is travelling.

According to an embodiment of the present invention, the length of the time intervals decrease with an increase of said velocity, above a certain velocity of the vehicle. Figure 5 shows a schematic example of a graph for such a choice of time interval lengths.

More specifically, according to an embodiment of the present invention, the length of the time intervals are determined decreasing with increasing velocity of the vehicle, such that geographical distances corresponding to these time interval lengths are essentially equal for consecutive intervals. That is, a geographical distance corresponding to a time interval between a first and a second point in time, is essentially equal to a geographical distance corresponding to a time interval ending in the first point in time. By this, a geographically even spread of positioning information is determined by the method, which can be very useful for the central entity, such as the FMP, in some implementations.

According to an embodiment of the present invention, positioning information is generated only when the vehicle is in motion. This is schematically shown in figure 4, for the embodiment with time intervals increasing with increasing velocity, where the time interval length approaches an infinite value for a very low velocity, here exemplified as under 2 km/h. This is also shown in figure 5, where the time interval length also approaches an infinite value for very low velocities.

According to an embodiment of the present invention, the length of a time interval during which the vehicle is standing essentially motionless essentially corresponds to the time period during which the vehicle is standing essentially motionless. Thus, positioning information is determined as long as the vehicle is in motion before the stop, and the determination of positioning information is resumed when the vehicle is in motion again after the stop. By this, it is very easily identified where and when the vehicle has not been moving, and therefore also when and where the driver has taken a break of some kind. This information is very useful for an owner of the vehicle or employer of the driver.

According to an embodiment of the invention, the lengths of the time intervals between consecutive points in time for which positioning information is generated are dependent on the heading of the vehicle, such that a length of the time intervals decrease with an increase in heading change for the vehicle. Thus, if the vehicle changes its direction a lot, the lengths get shorter. This has an advantage in that positioning information is generated for a higher number of geographical positions for the vehicle if it travels on city streets, which results in a lot of turns, than if it travels on a motor highway or the like, which results in fewer turns. This has the effect that the generation of positioning information is adapted to the road conditions such that a most probable path can be determined at the same time as computation and transmission of positioning information is not wasted on straight roads, such as motor highways.

According to an embodiment of the invention, information being related to a geographical position is generated when the heading of the vehicle changes more than a certain level, i.e. more than a certain angle. Thus, a point in time, for which positioning information is determined, is by this embodiment set to be the point in time when a great change in direction is made by the vehicle. This has an advantage in that this level can be set such that no positioning information is generated for normal turns of the road, and such that positioning information is generated for the geographical positions, in which the vehicle changes from one street to another.

According to an embodiment of the invention, the certain level, above which positioning information should be generated, corresponds to a heading change of approximately 80 degrees. This assures that only sharp turns, i.e. changes of streets, result in positioning information generation. As is clear for a skilled person, the certain level of heading change may vary for different roadmaps in order to adapt to the layout of roads or streets for that particular roadmap. The main requirement for this certain level of heading change is that it should be sufficient for being able to determine the most probable path being travelled by the vehicle.

Further, according to an embodiment of the invention, the lengths of the time intervals between consecutive points in time for which positioning information is generated are dependent on both the velocity of the vehicle and the heading of the vehicle. Thus, the determination of the time interval lengths is a combination of the determination utilizing the vehicle velocity and the determination utilizing the vehicle heading. These two determinations are here weighed together such that a very exact and reliable determination of the time interval lengths is possible.

According to an embodiment of the invention, the positioning information being determined also includes information relating to the point in time when the information related to the geographical position was determined. Thus, the time corresponding to the determination of the information relating to the geographical position is included in the positioning information together with information related to a latitude and a longitude of the geographical position. By including the time information, the whereabouts of the vehicle can be more exactly determined by the central entity.

Further, according to an embodiment of the present invention, the length of the time interval is determined based on a velocity, where the velocity of the vehicle is determined essentially at the beginning of each interval, i.e. in the first point in time for a time interval running from a first point in time to a second point in time. This embodiment has the advantage of a simple and low complexity implementation.

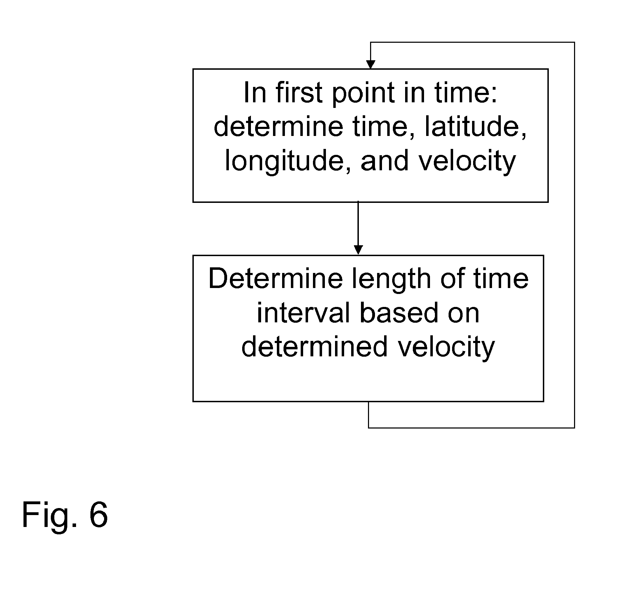

Figure 6 show a flow chart diagram for an algorithm for positioning generation, which works in accordance with this embodiment of the invention. In a first step of the algorithm, being performed at the beginning of the time interval, i.e. in the first point in time for a time interval running from a first point in time to a second point in time the point, the point in time is determined, as well as latitude and longitude for the corresponding geographical position, and the velocity of the vehicle.

In a second step of the algorithm, the length of the following time interval is determined based on the velocity having been determined in the first step.

According to an embodiment of the present invention, the length of the time interval is instead determined based on an actual velocity and/or heading of the vehicle during that interval. This results in a very exact determination of the length of the time interval, which follows possible changing velocities and/or directions for the vehicle during the time interval.

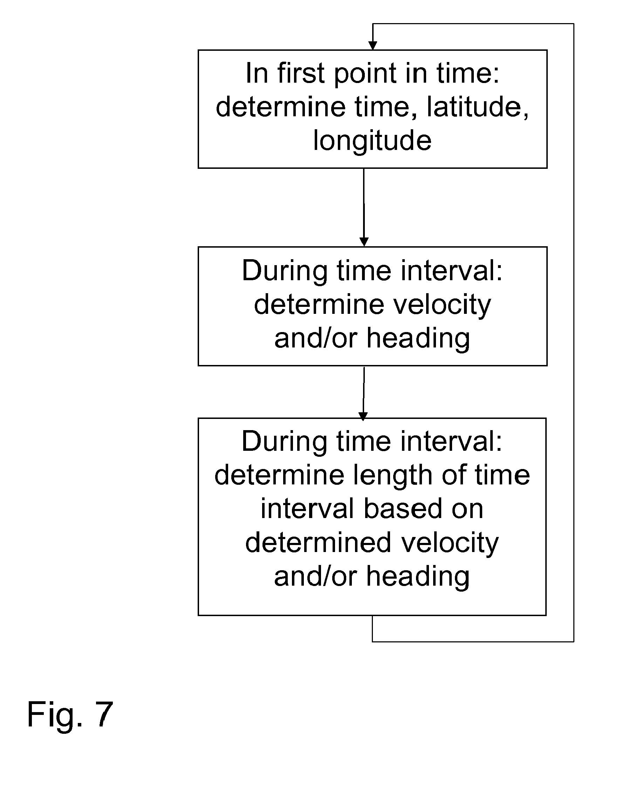

Figure 7 show a flow chart diagram for an algorithm for positioning information generation, which works in accordance with this embodiment of the invention. In a first step of the algorithm, being performed in the first point in time for a time interval running from a first point in time to a second point in time the point, the point in time is determined, as well as latitude and longitude for the corresponding geographical position.

In a second step of the algorithm, being performed during the time interval, the velocity and/or heading of the vehicle is determined. In a third step of the algorithm, which is also performed during the time interval, the length of the time interval is determined based on the velocity and/or heading having been determined in the second step. Thus, the velocity and/or heading can here be more or less continuously monitored during the time interval, which results in an exact determination of the possibly varying velocity and/or heading and therefore also of the length of the time interval.

The velocity information used in the different embodiments of the invention can be provided by essentially any velocity indicating arrangement, such as a Global Positioning System (GPS) arrangement or a speedometer. The heading information is provided by essentially any direction indicating arrangement, such as a GPS device, a gyro device, or a magnetic compass device. The information can be provided to the processing unit processing the algorithm by the use of a bus arrangement, such as a Control Area Network (CAN ) bus, a Time Triggered (TT) CAN bus, a Flexray bus, a ByteFlight bus, or the like, from the GPS arrangement or speedometer.

Further, according to a method for transfer of positioning information of the present invention, information related to one geographical position is transmitted from said vehicle in one message. Thus, each message containing positioning information includes information related to only one geographical position. As stated above, such a message may also include other information being related to the vehicle or the driver. Preferably, these messages have a predefined static form, comprising a number of fields of predefined size and location in the message.

According to another a method for transfer of positioning information of the present invention, information related to two or more geographical positions is transmitted from the vehicle in one single message. Thus, each one of these messages includes positioning information related to more than one geographical position. Preferably, such messages have a dynamic form, such that at least one of the number of fields and the size of the fields of the message can be adjusted.

This method for transfer of positioning information has the advantage that it dramatically reduces the amount of information having to be transmitted over the wireless communication system, since the messages can here be sent much more seldom. Generally, the central entity needs determined positioning information much more frequently that the other information being present in the messages. For instance, it is important for a central entity to receive positioning information being frequently enough determined for it to be able to determine the most probable path, but it does not have to receive very frequent information regarding e.g. driver behavior. Thus, the information being related e.g. to the vehicle and/or the driver can be reduced without loosing functionality of the central entity.

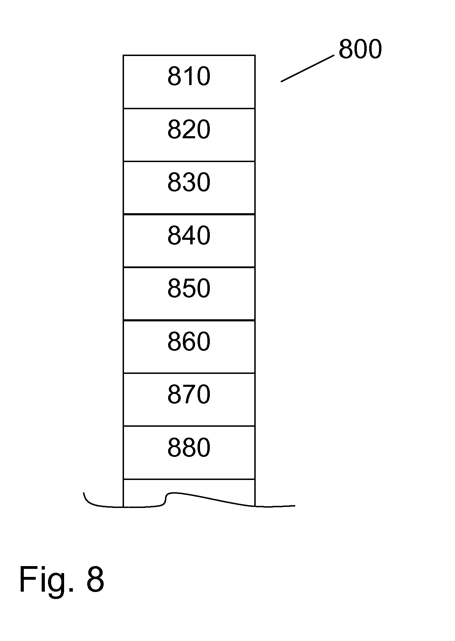

Figure 8 shows a non-limiting schematic example of a message 800 according an embodiment of the method for transfer of positioning information of the invention. The message includes one field 810, being allocated for one positioning information; fields 820-830, being allocated for other vehicle and driver related information; and fields 840-880, being allocated for further positioning information. By using this form of the message, positioning information related to six geographical positions can be sent in the fields 810, and 840-880 of the same message. Thus, positioning information relating to six geographical positions can here be determined with e.g. a 5 minutes average time interval between each determination if a message is sent every 30 minutes. The information being related to the vehicle and/or the driver is only generated and transmitted once, instead of being generated and transmitted with the 5 minutes average time interval. This saves a lot of processing power and reduces the number of data bits being transmitted via the wireless communication system. As is stated above, the message 800 has a dynamic form, and different messages can different numbers of fields, or different sizes of the fields.

The different steps of the method of the invention described above can be combined or performed in essentially any suitable order. A condition for this of course, is that the requirements of a step, to be used in conjunction with another step of the method of the invention, must be fulfilled.

The method of the invention can be implemented by a computer program, having code means, which when run in a computer causes the computer to execute the steps of the method. The computer program is included in a computer readable medium of a computer program product. The computer readable medium may consist of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

The method of the invention is implemented by an arrangement for generating positioning information for a vehicle, wherein the positioning information includes information related to at least two geographical positions being determined for at least two points in time. According to the invention, the arrangement is arranged for separating a first and a second consecutive point in time of these at least two points in time by a time interval, wherein that time interval has a length being dynamically determined based on a velocity and/or a heading of the vehicle.

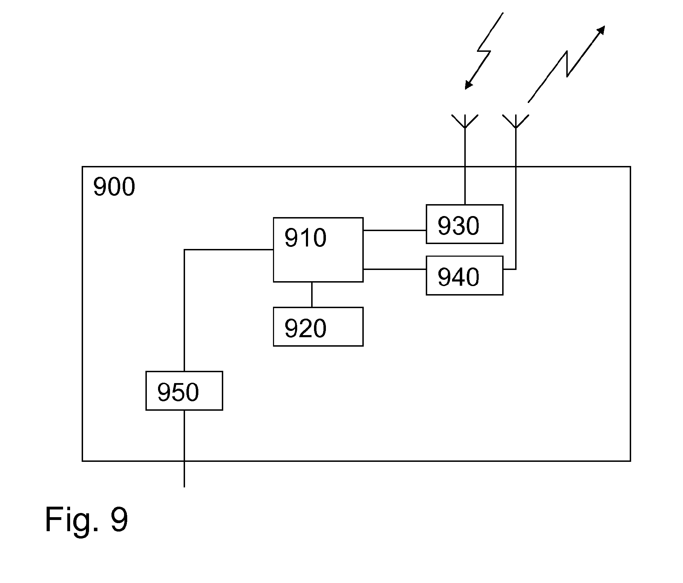

Figure 9 shows a schematically shows such an arrangement 900. The arrangement includes a processing unit 910, being arranged for performing the different steps of the method of the invention. The processing unit 910 is provided with program instructions and parameters from a memory unit 920, and with GPS information and/or heading information from one or more GPS and/or heading indicating unit 930. The processing unit communicates over the wireless communication system by the use of the wireless communication unit 940, and with the CAN bus or a cable arrangement of the vehicle by the use of a CAN bus driver and/or cable driver 950. As stated above, the bus can be essentially any bus, such as a Control Area Network (CAN ) bus, a Time Triggered (TT) CAN bus, a Flexray bus, a ByteFlight bus, or the like.

As was stated above, the processing unit can receive velocity information and/or heading information from either one of the GPS and/or heading indicating unit 930, or a speedometer, a compass device or the like via the CAN bus and/or cable arrangement of the vehicle.

The method and arrangement for generating positioning information according to the invention may be modified by those skilled in the art, as compared to the exemplary embodiments described above.

## Claims

1. Method for generating positioning information for a vehicle, said positioning information including information related to at least two geographical positions being determined for at least two points in time,
**characterized in that** a first and a second consecutive point in time of said at least two points in time are separated by a time interval, wherein said time interval has a length being dynamically determined based on a velocity of said vehicle, wherein said length, above a certain velocity of said vehicle, increases with an increase of said velocity.

2. Method as claimed in claim 1, wherein said length being dynamically determined based on a velocity of said vehicle and a heading of said vehicle

3. Method as claimed in anyone of claims 1-2, wherein said positioning information is generated only when said vehicle is in motion.

4. Method as claimed in claim 3, wherein, when said vehicle is standing essentially motionless, said length corresponds essentially to a time period during which said vehicle is standing essentially motionless.

5. Method as claimed in anyone of claims 1-4, wherein said length is chosen such that it is sufficiently short for a most probable path travelled by said vehicle to be determinable.

6. Method as claimed in anyone of claims 1-5, wherein said positioning information includes information relating to the point in time when the information related to the geographical position was determined.

7. Method as claimed in anyone of claims 1-6, wherein a length of said time interval is determined based on a velocity of said vehicle being determined essentially in the first point in time.

8. Method as claimed in anyone of claims 1-6, wherein a length of said time interval is determined based on an actual velocity of said vehicle being determined during said time interval.

9. Method as claimed in anyone of claims 1-8, wherein said velocity is determined based on velocity information provided by a bus or cable arrangement from at least one device in the group:
- a Global Positioning System (GPS) device; and
- a speedometer device.

10. Method as claimed in claim 2, wherein said length decreases with an increase in heading change for said vehicle.

11. Method as claimed in claim 10, wherein at least one of said first and second point in time corresponds to a geographical position in which said vehicle performs a heading change being above a certain level of heading change.

12. Method as claimed in claim 11, wherein said certain level of heading change corresponds to a heading change exceeding approximately 80 degrees.

13. Method as claimed in anyone of claims 10-12, wherein said heading is determined based on heading information being provided by a bus or cable arrangement from at least one device in the group:
- a Global Positioning System (GPS) device;
- a gyro device; and
- a magnetic compass device.

14. Method for transfer of positioning information,
**characterized in that** positioning information, being generated in accordance with a method as claimed in anyone of claims 1-13 and being related to a geographical position corresponding to one of said at least two of points in time, is transmitted from said vehicle in one message.

15. Method as claimed in claim 14, wherein said message has a predefined static form.

16. Method for transfer of positioning information,
**characterized in that** positioning information, being generated in accordance with a method as claimed in anyone of claims 1-15 and being related to geographical positions corresponding to more than one of said at least two of points in time, is transmitted from said vehicle in one single message.

17. Method as claimed in claim 16, wherein said message has a dynamic form.

18. Computer program, **characterised in** code means, which when run in a computer causes the computer to execute the method according to any of the claims 1-17.

19. Computer program product including a computer readable medium and a computer program according to claim 18, wherein said computer program is included in the computer readable medium.

20. An arrangement for generating positioning information for a vehicle, said positioning information including information related to at least two geographical positions being determined for at least two points in time,
**characterized in that** said arrangement is arranged for separating a first and a second consecutive point in time of said at least two points in time by a time interval, wherein said time interval has a length being dynamically determined based on at least one of a velocity of said vehicle and a heading of said vehicle.
